# NEUE EUROPÄISCHE PATENTSCHRIFT

(11) **EP 3 357 682 B2**
(45) Veröffentlichungstag und Bekanntmachung des Hinweises auf die Entscheidung über den Einspruch: **12.10.2022**
(45) Hinweis auf die Patenterteilung: 07.08.2019
(21) Anmeldenummer: 18154238.2
(22) Anmeldetag: 30.01.2018
(51) Int. Cl.: B32B 5/02, B32B 7/12, B32B 27/08, B32B 27/12, B32B 27/16, B32B 27/32, B32B 3/26, B32B 3/30, E04B 1/68

(54) **GEBÄUDESTRUKTUR**
BUILDING STRUCTURE
STRUCTURE DE BÂTIMENT

(30) Priorität: 02.02.2017 DE 202017000549 U
(43) Veröffentlichungstag der Anmeldung: 08.08.2018
(73) Patentinhaber: Watermann Polyworks GmbH, 32758 Detmold (DE)
(72) Erfinder: Watermann, Markus, 32760 Detmold (DE)
(74) Vertreter: Freischem & Partner Patentanwälte mbB

(56) Entgegenhaltungen:
- EP-A1- 0 045 893
- EP-A1- 2 325 273
- EP-A1- 2 949 462
- EP-A1- 3 173 533
- WO-A1-2010/015521
- DE-A1-102008 003 747
- DE-A1-102014 107 423
- DE-U1-202012 101 447

## Beschreibung

Die Erfindung betrifft eine Gebäudestruktur mit einem Dichtelement.

Häufig besteht die Notwendigkeit, Gebäudestrukturen gegen das Eintreten, Austreten oder Durchdringen von Feuchtigkeit abzudichten. Hierfür kommen regelmäßig flächige Dichtelemente in Betracht, welche eine vergleichsweise geringe Dicke und eine vergleichsweise große flächige Ausdehnung aufweisen. Mit derartigen Dichtelementen können großflächige Gebäudestrukturen in einfacher Weise abgedichtet werden, ohne dass die Dicke der Gebäudestrukturen übermäßig zunimmt.

Nach dem Stand der Technik finden hierfür regelmäßig Kunststofffolien Verwendung. Diese Kunststofffolien weisen eine erste und eine zweite Seite auf, mit denen sie regelmäßig mit anderen Schichten der Gebäudestruktur verbunden werden.

EP 2 325 273 A1 beschreibt ein Montageklebeband für den Innenausbau von Dächern in Gebäuden.

Ein häufiges Problem stellt hierbei die Anbindung einer solchen Kunststofffolie an benachbarte Schichten der Gebäudestruktur dar. Befestigungsmethoden mit Hilfsmitteln, welche die Folien durchdringen, wie Klammern oder Nägel, sind unerwünscht, da diese die Dichtigkeit der Folie lokal beeinträchtigen. Die Verwendung von Bauklebern für eine derartige Folie ist jedoch in der Praxis ebenfalls schwierig, da diese häufig nur unzureichend an der Folie haften. In der Praxis werden daher regelmäßig Vliese auf die Folien aufgebracht, um eine Oberfläche zur Verfügung zu stellen, an der die Baukleber ausreichenden Halt finden.

Der Erfindung liegt daher die Aufgabe zugrunde, eine Gebäudestruktur mit einem Dichtelement der eingangs genannten Art zur Verfügung zu stellen, welches eine bessere und/oder kostengünstigere Lösung, insbesondere im Hinblick auf die Anbringung des Dichtelements mit Bauklebern, darstellt.

Die Aufgabe wird gelöst durch eine Gebäudestruktur mit einem Dichtelement mit den Merkmalen der unabhängigen Ansprüche. Die Merkmale der abhängigen Ansprüche betreffen vorteilhafte Ausführungsformen.

Erfindungsgemäß ist vorgesehen, dass die Kunststofffolie auf ihrer ersten Seite und/oder ihrer zweiten Seite mit einem Haftvermittler beschichtet ist. Der Haftvermittler ist ein wasserbasierter Haftvermittler oder ein Haftvermittler, der Kieselsäure enthält.

Es hat sich überraschenderweise gezeigt, dass die Verwendung eines Haftvermittlers - auch bezeichnet als "Primer" - die Verarbeitbarkeit von Dichtelementen der in Rede stehenden Art wesentlich verbessert, wenn diese mit Bauklebstoffen mit anderen Bestandteilen einer Gebäudestruktur verbunden bzw. an diese angebracht werden.

Als besonders vorteilhaft hat es sich erwiesen, wenn es sich bei der Kunststofffolie um eine Polyolefinfolie handelt. Folien aus Polyolefinen, insbesondere aus Polyethylen oder Polypropylen, eignen sich aufgrund ihrer mechanischen, physikalischen und chemischen Eigenschaften besonders gut für die Verwendung in erfindungsgemäßen Dichtelementen und sind darüber hinaus insbesondere als bahnförmige Halbzeuge kostengünstig verfügbar.

Wasserbasierte Haftvermittler weisen Vorteile hinsichtlich der Umweltverträglichkeit auf.

Als besonders vorteilhaft hat sich im Zusammenhang mit der vorliegenden Erfindung die Verwendung eines Haftvermittlers, der Kieselsäure enthält, gezeigt.

Es ist besonders vorteilhaft, wenn die erste und/oder zweite Seite der Kunststofffolie vor dem Beschichten mit dem Haftvermittler eine Oberflächenbehandlung zur Erhöhung der Polarität erfahren hat. In diesem Zusammenhang hat sich insbesondere als vorteilhaft herausgestellt, wenn die Kunststofffolie einer Koronabehandlung unterzogen worden ist. Grundsätzlich können aber auch andere Formen entsprechender Oberflächenbehandlungen, wie Flammbehandlungen, Fluorierungen oder Plasmabehandlungen eine vorteilhafte Erhöhung der Polarität der Oberfläche der Kunststofffolie im Zusammenhang mit der vorliegenden Erfindung herbeiführen.

Vorteilhafterweise ist der Haftvermittler vollflächig auf die erste und/oder zweite Seite der Kunststofffolie aufgebracht. Ein vollflächiger Auftrag des Haftvermittlers ermöglicht es, die entsprechende Seite der Folie an jeder ihrer Stelle in verwässerter Weise mit einem anderen Element einer Gebäudestruktur zu verbinden.

Vorteilhafterweise kann auf die Kunststofffolie auf ihrer ersten und/oder zweiten Seite eine selbstklebende Beschichtung aufgebracht werden. Auch diese Beschichtung kann bevorzugt vollflächig, aber auch teilflächig auf das Dichtelement, insbesondere auf die Kunststofffolie, aufgebracht sein. Eine derartige selbstklebende Beschichtung hat den Vorteil, dass das Dichtelement einfach zu verarbeiten ist, da vor Ort keine separaten Bauklebstoffe benötigt werden.

Vorteilhafterweise kann die Kunststofffolie auf ihrer ersten und/oder zweiten Seite ein textiles Flächengebilde aufweisen. Ein solches textiles Flächengebilde schafft eine strukturierte Oberfläche und verbessert so die Verzahnungsmöglichkeiten zwischen der Folie und dem Element der Gebäudestruktur, an dem das erfindungsgemäße Dichtelement befestigt wird. Es kann sich bei dem textilen Flächengebilde um ein Vlies handeln, darüber hinaus ist es möglich, das textile Flächengebilde in vorteilhafter Weise vollflächig auf die Kunststofffolie aufzubringen. Ein teilflächiges Aufbringen des textilen Flächengebildes auf die Kunststofffolie bzw. auf das Dichtelement ist jedoch auch möglich.

Vorteilhafterweise weist die Kunststofffolie auf der ersten Seite Vertiefungen auf, deren komplementäre Erhebungen auf der zweiten Seite der Kunststofffolie entsprechen. Eine solche Profilierung der Kunststofffolie ermöglicht es, die Kunststofffolie zu nutzen, um ein Kanalsystem in einer Gebäudestruktur zu erzeugen. Dieses kann beispielsweise der Abfuhr von Feuchtigkeit in der Erstreckungsebene des Dichtelements dienen.

Die Erhebungen weisen vorteilhafterweise die Gestalt von Noppen auf und/oder sind bevorzugt in einem regelmäßigen Raster über die Fläche der Kunststofffolie verteilt.

Besonders vorteilhaft ist, wenn das Dichtelement ein weiteres Flächengebilde aufweist. Bei diesem kann es sich ebenfalls um ein textiles Flächengebilde, insbesondere ein Vlies, handeln und/oder um ein Flächengebilde, das in vorteilhafter Weise Öffnungen und/oder Poren aufweist. Solche Flächengebilde können so gestaltet werden, dass sie von fluiden Baustoffen bei der Herstellung der Gebäudestruktur durchdrungen, nicht durchdrungen oder nur teilweise durchdrungen werden. Hierdurch ist es möglich, gezielt unterschiedliche Strukturen zu erzielen, insbesondere kann ein teilweise durchdrungenes Flächengebilde eine gute Anbindung zu einer weiteren Gebäudeschicht herstellen, während gleichzeitig ein Kanalsystem zwischen Kunststofffolie und weiterem Flächengebilde ausgebildet wird.

Die Bildung eines Kanalsystems wird insbesondere dadurch begünstigt, dass das weitere Flächengebilde mit den Erhebungen verbunden ist. Auf diese Weise entsteht um die Erhebungen zwischen der Kunststofffolie und dem weiteren Flächengebilde ein Kanalsystem, insbesondere dann, wenn das Flächengebilde in einer Ebene verläuft und nicht der Kontur der ihm zugewandten Ebene der Kunststofffolie folgt.

Das Dichtelement kann zum Abdichten großer Flächen bahnförmig gestaltet sein. Auch eine bandförmige Gestaltung zur Abdichtung schmalerer Bereiche ist in vorteilhafter Weise möglich. Insbesondere dann, wenn das Dichtelement eine gewisse Biegesteifigkeit aufweist, bietet sich auch die Gestaltung des Dichtelements in Plattenform an.

Das Dichtelement kann ferner eine auf den Verwendungszweck angepasste Geometrie, insbesondere Geometrie der Randkontur, aufweisen. Auf diese Weise kann das Dichtelement - im Sinne eines Formteils - beispielsweise eine Ecke auskleiden. Auch die Gestaltung des Dichtelements aus einer Mehrzahl von Teilen ist denkbar, wobei diese Teile Dichtelemente der in Rede stehenden Art und/oder andere Funktionselemente sein können. Die Teile können beispielsweise durch Schweißverfahren, insbesondere Ultraschallschweißverfahren oder thermische Schweißverfahren aneinandergefügt sein.

In einer erfindungsgemäßen Gebäudestruktur wird ein Dichtelement insbesondere derart verwendet, dass es eine Schicht zwischen zwei dem Dichtelement benachbarten weiteren Schichten der Gebäudestruktur bildet. Hierbei kann es sich beispielsweise bei einer Schicht um ein Mauerwerk, Betonestrich, eine Trockenbauwand oder dergl. handeln, während die andere Schicht eine dekorative und/oder funktionale Oberfläche der Gebäudestruktur bereitstellt, beispielsweise einen Fußbodenbelag, wie ein Laminat oder ein Fertigparkett, oder eine Fliesenverkleidung.

Auch ist es möglich, das erfindungsgemäße Dichtelement zur Herstellung einer luftdichten erfindungsgemäßen Gebäudestruktur zu nutzen. Diese kann als Bestandteil einer luftdichten Gebäudehülle verwendet werden.

Mit dem erfindungsgemäßen Dichtelement können - vor allem aufgrund der guten Haftwirkung - auch vertikal orientierte Gebäudestrukturen, wie Wände, in zuverlässiger Weise mit entsprechenden dekorativen und/oder funktionalen Außenschichten, wie Verkachelungen oder (Holz-)Vertäfelungen versehen werden.

Bevorzugt ist es möglich, dass die Vertiefungen mit einem Material ausgefüllt sind. Ein Ausfüllen der Vertiefungen bedingt, dass die Erhebungen eine Formstabilität erhalten, die es ermöglicht, sie im Sinne kleiner "Stützen" in der Gebäudestruktur zu nutzen. Dies ist insbesondere von Bedeutung, wenn es beispielsweise darum geht, unter einem Fußbodenbelag ein Kanalsystem zur Abfuhr von Feuchtigkeit zu schaffen. Diese kann so durch das mittels des erfindungsgemäßen Dichtelements geschaffene Kanalsystem austreten, während die mechanischen Kräfte, die auf den Fußbodenbelag eingeleitet werden, über die ausgefüllten Erhebungen in die unter dem Dichtelement liegende Fußbodenkonstruktion eingeleitet werden.

Die Kunststofffolie kann insbesondere, um dem Dichtelement eine hinreichende Steifigkeit und/oder Festigkeit zu verleihen, mehrschichtig aufgebaut sein. Darüber hinaus können in vorteilhafter Weise Verstärkungselemente in der Kunststofffolie vorgesehen sein, wie eine bewährende Zwischenlage und/ oder Faserverstärkungen.

Bevorzugt kann das Dichtelement einen elastischen Dichtbereich aus einem elastischen Werkstoff aufweisen. Der Dichtbereich dient der Anlage an einem aus der Gebäudestruktur hervortretenden Bauelement, welches durch eine Durchführungszone in dem Dichtbereich durch das Dichtelement hindurchgeführt wird. Hierbei entsteht eine Gebäudestruktur mit einem aus der Wand hervortretenden Bauelement, welches durch ein Dichtelement geführt ist, bei der der elastische Dichtbereich des Dichtelements umfangsseitig an der Oberfläche des Bauelements anliegt. Der Dichtbereich wird dabei durch das Bauelement elastisch verformt. Durch seine elastische Reaktionskraft wird das Dichtelement an die Oberfläche des Bauteils angedrückt.

Durch dieses, durch die elastischen Reaktionskräfte verursachte Andrücken des Dichtbereichs an die Oberfläche des Bauelements wird eine verbesserte Abdichtung erzielt.

Vorteilhaft ist es, wenn der Dichtbereich einen verdickten Bereich aufweist, der die Durchführungszone umgibt. Dieser verdickte Bereich bewirkt bei gleicher Verformung eine höhere elastische Reaktionskraft als ein herkömmlicher Dichtbereich ohne eine erfindungsgemäße Verdickung. Bei ansonsten gleicher Geometrie von Dichtbereich und Bauelement wird so ein durch die Durchführungszone des Dichtelements geführtes Bauelement eine stärkere elastische Reaktionskraft im Dichtbereich verursachen, was darauf zurückzuführen ist, dass zumindest ein Teil dieser elastischen Reaktionskraft auf der elastischen Verformung des verdickten Bereichs beruht. Durch diese verstärkte elastische Reaktionskraft und die daraus resultierenden stärkeren Andruckkräfte des Dichtbereichs an das Bauelement wird eine bessere Abdichtung zwischen Bauelement und Dichtelement erzielt.

Vorzugsweise ist die Durchführungszone des Dichtbereichs als insbesondere kreisrunde Öffnung gestaltet. Es sind aber auch andere Gestaltungen denkbar, beispielsweise in Gestalt einer lokalen Schwächung in Gestalt einer Perforation oder ähnliches, welche ein Durchführen des Bauelements durch den Dichtbereich des Dichtelements erleichtern bzw. ermöglichen. In der einfachsten Ausführung handelt es sich lediglich um die Zone des Dichtbereichs, die für die Durchführung des Bauelements bestimmt ist. Bei einer solchen Gestaltung kann dann die Durchführung des Bauelements durch die Durchführungszone beispielsweise derart bewirkt werden, dass vor Ort eine entsprechende Öffnung in den Dichtbereich geschnitten wird.

Bevorzugt weist der elastische Werkstoff eine Shore A Härte von wenigstens 35 und/oder höchstens 85 auf. Es hat sich gezeigt, dass elastische Werkstoffe, insbesondere Kunststoffe, deren Shore A Härte in diesem Bereich liegt, ein elastisches Verformungsverhalten aufweisen, welches vorteilhaft für das Entstehen der für die Abdichtung des Dichtbereichs am Bauelement verantwortlichen elastischen Reaktionskräfte ist.

Besonders bevorzugt ist der elastische Werkstoff ein Elastomer. Elastomere sind insbesondere Kunststoffe mit einer gummielastischen Verformbarkeit, welche sich positiv auf die Erzeugung der für die Abdichtung notwendigen elastischen Reaktionskräfte auswirkt. Darüber hinaus weisen derartige Kunststoffe eine hohe Dichtwirkung gegen Feuchtigkeit auf.

Besonders bevorzugt ist der elastische Werkstoff ein thermoplastischer Werkstoff, insbesondere ein thermoplastischer Kunststoff. Diese Werkstoffe haben den Vorteil, unter Wärmeeinwirkung plastisch verformbar zu werden, was eine kostengünstige Herstellbarkeit des Dichtelements zur Folge hat.

Vorteilhafterweise ist der Dichtbereich des Dichtelements in einem Spritzgussverfahren hergestellt. Spritzgussverfahren erlauben es, die verdickten Bereiche durch den Einsatz entsprechender Formen vergleichsweise einfach und kostengünstig zu erzeugen. Dies kann beispielsweise geschehen, indem in einem ansonsten lediglich flächig gestalteten Spritzgusswerkzeug eine Nut als Negativabdruck des zu erzeugenden verdickten Bereichs eingebracht wird. Auf diese Weise können die Spritzgusswerkzeuge geometrisch einfach und damit vergleichsweise kostengünstig gestaltet werden.

Der verdickte Bereich ist bevorzugt zumindest im Wesentlichen kreis- oder ringförmig gestaltet. Kreis- oder ringförmige Gestaltungen des verdickten Bereiches ermöglichen es, eine gut dichtende Anlage des Dichtbereichs an der Oberfläche eines Bauelements mit einem entsprechenden runden Querschnitt zu ermöglichen. Insbesondere Rohre und Kabel können auf diese Weise besonders vorteilhaft durch das Dichtelement hindurchgeführt werden. Es versteht sich, dass auch andere Gestaltungen denkbar sind, um die Durchführung eines Bauelements mit einem anderen, beispielsweise einem rechteckigen Querschnitt, wie beispielsweise eines Kabelkanals, zu ermöglichen.

Vorteilhafterweise ist der Dichtbereich in einer Ausnehmung des Dichtelements angeordnet. Dies ermöglicht es, lediglich den Dichtbereich aus dem elastischen Werkstoff des Dichtbereichs auszuführen, so dass dieser lediglich den unmittelbaren Bereich um das aus der Gebäudestruktur hervortretende Bauelement abdichtet.

Vorteilhafterweise wird das Dichtelement zunächst als durchgängiges flächiges Material hergestellt und dann in einem weiteren Schritt eine Ausnehmung, beispielsweise durch Ausschneiden, in das Dichtelement eingebracht. Der separat hergestellte Dichtbereich kann dann im Bereich dieser Ausnehmung mit dem Dichtelement verbunden werden. Es kann in vorteilhafter Weise eine randseitige Überlappung von Dichtbereich und Dichtelement vorgesehen sein, die ein dauerhaftes Verbinden des Dichtbereichs mit dem Dichtelement begünstigt. Die Verbindung kann beispielsweise durch ein Verkleben erfolgen.

Bei der erfindungsgemäßen Gebäudestruktur kann das Dichtelement auf die Gebäudestruktur aufgebracht sein, in vorteilhafter Weise ist es jedoch in die Gebäudestruktur integriert. Aufgrund seiner geringen Ausdehnung in Dickenrichtung kann das erfindungsgemäße Dichtelement bevorzugt eine Funktionsschicht im Rahmen eines mehrschichtigen Aufbaus der Gebäudestruktur darstellen. Es kann vorteilhafterweise zwischen den tragenden Bereichen der Gebäudestruktur, beispielsweise einem Mauerwerk, einer Wand aus Beton oder einer Trockenbauwand, und einer die Wand verkleidenden dekorativen Schicht, wie einem Putz oder einer Fliesenauflage, angeordnet sein.

Besonders vorteilhaft lässt sich das erfindungsgemäße Dichtelement als Bestandteil von Gebäudestrukturen einsetzen, an die hohe Anforderungen hinsichtlich ihrer Feuchtigkeits- bzw. Wasserdichtigkeit gestellt werden. In Betracht kommen insbesondere Gebäudestrukturen, die der Witterung ausgesetzt sind sowie Nasszellen und ihre Bestandteile.

Zur Erzeugung der elastischen Reaktionskräfte ist es insbesondere vorteilhaft, wenn der verdickte Bereich so bemessen ist, dass er bei der Durchführung des Bauelements durch das Dichtelement zwangsweise eine Verformung erfährt. Dies heißt insbesondere, dass der Umfang der von dem verdickten Bereich umgebenen Zone des Dichtbereichs geringer ist als der Umfang der Oberfläche des Bauelements, an der der Dichtbereich anliegt.

Die Erfindung wird im Folgenden anhand der Figuren 1 bis 6 schematisch näher erläutert.
Fig. 1 bis 3 zeigen schematische Querschnittsdarstellungen beispielhafter erfindungsgemäßer Dichtelemente mit unterschiedlichen Beschichtungen.
Fig. 4 zeigt eine Draufsicht eines beispielhaften erfindungsgemäßen Dichtelements mit Erhebungen und Vertiefungen.
Fig. 5 zeigt eine Querschnittsdarstellung des beispielhaften erfindungsgemäßen Dichtelements aus Fig. 4.
Fig. 6 zeigt ein beispielhaftes erfindungsgemäßes Dichtelement mit einem weiteren Flächengebilde.

Das beispielhafte erfindungsgemäße Dichtelement 1 weist eine Kunststofffolie 2 auf. Den schematisch dargestellten Dichtelementen ist gemein, dass sie eine Kunststofffolie 2 aufweisen, welche auf ihrer ersten und/oder zweiten Seite mit einem Haftvermittler 3 beschichtet ist.

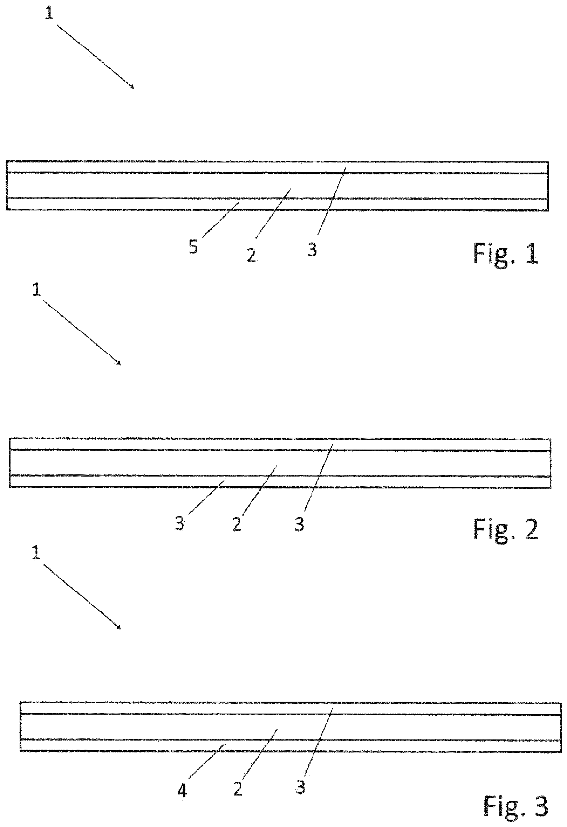

Bei dem in Fig. 1 dargestellten beispielhaften Dichtelement 1 weist die Kunststofffolie 2 auf ihrer ersten Seite eine Beschichtung mit einem Haftvermittler 3 auf. Auf ihrer zweiten Seite ist ein textiles Flächengebilde 5 in Gestalt eines Vlieses auf die Kunststofffolie 2 aufgebracht. Im Fall des in Fig. 2 dargestellten beispielhaften erfindungsgemäßen Dichtelements 1 ist die Kunststofffolie 2 auf ihrer ersten Seite und ihrer zweiten Seite mit dem Haftvermittler 3 beschichtet. Im Fall des in Fig. 3 dargestellten beispielhaften Dichtelements 1 ist die erste Seite der Kunststofffolie 2 mit einem Haftvermittler 3 beschichtet. Die zweite Seite weist eine selbstklebende Beschichtung 4 auf.

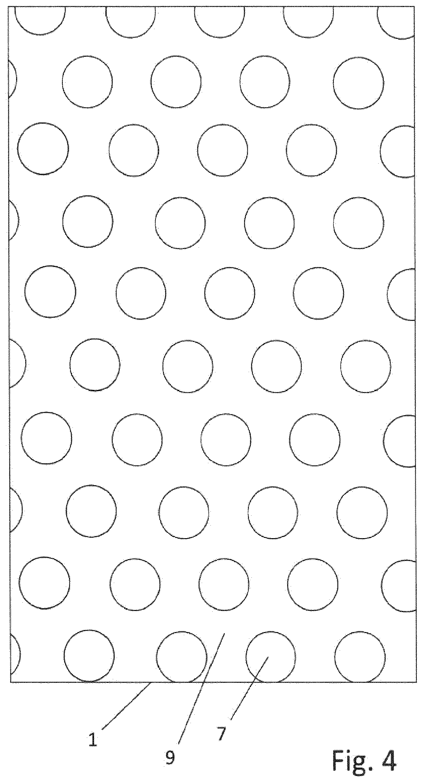

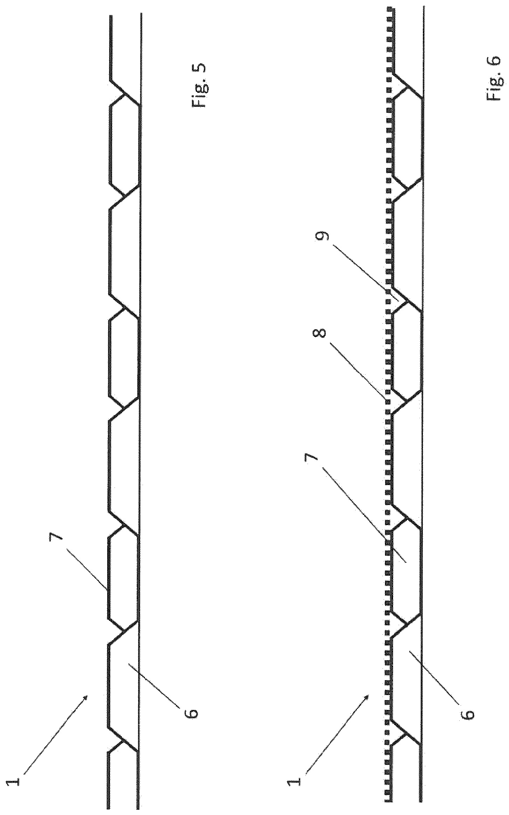

Das in den Fig. 4 und 5 dargestellte beispielhafte Dichtelement weist ebenfalls eine erfindungsgemäße Beschichtung der ersten und/oder der zweiten Seite mit einem Haftvermittler auf. Die Beschichtung ist jedoch in den Fig. 4 bis 6 nicht dargestellt. Die in den Fig. 4 bis 6 dargestellten beispielhaften Dichtelemente 1 weisen Vertiefungen 6 und mit den Vertiefungen 6 korrespondierende Erhebungen 7 auf. Die Vertiefungen 6 und Erhebungen 7 sind in vorteilhafter Weise regelmäßig über die Fläche des Dichtelements 1 verteilt. Die im gezeigten Beispiel noppenförmigen Erhebungen 7 ermöglichen eine Ausbildung eines Kanalsystems 9 um die noppenförmigen Erhebungen 7. Die Bildung eines solchen Kanalsystems kann in vorteilhafter Weise begünstigt werden durch ein weiteres Flächengebilde 8, welches mit den Erhebungen 7 verbunden ist. Dies ist beispielhaft in Fig. 6 dargestellt. Die Vertiefungen 6 können in einer erfindungsgemäßen Gebäudestruktur in vorteilhafter Weise mit einem Material, insbesondere mit einem aushärtenden bzw. ausgehärteten Material, gefüllt sein, um so mechanisch belastbare "Stützen" zwischen zwei Schichten einer Gebäudestruktur, zwischen denen das erfindungsgemäße Dichtelement 1 angeordnet ist, auszubilden.

### Bezugszeichenliste

- 1: Dichtelement
- 2: Kunststofffolie
- 3: Haftvermittler
- 4: selbstklebende Beschichtung
- 5: textiles Flächengebilde
- 6: Vertiefung
- 7: Erhebung
- 8: weiteres Flächengebilde
- 9: Kanalsystem

## Patentansprüche

1. Gebäudestruktur, insbesondere Wand, Boden und/oder Decke, mit einem Dichtelement mit einer Kunststofffolie (2), insbesondere einer Polyolefinfolie, wobei die Kunststofffolie (2) eine erste und eine von der ersten Seite der Kunststofffolie (2) abgewandte zweite Seite aufweist, wobei die Kunststofffolie (2) auf ihrer ersten Seite und/oder zweiten Seite, insbesondere vollflächig, mit einem Haftvermittler (3) beschichtet ist,
**dadurch gekennzeichnet, dass** der Haftvermittler (3) ein wasserbasierter Haftvermittler ist.

2. Gebäudestruktur, insbesondere Wand, Boden und/oder Decke, mit einem Dichtelement mit einer Kunststofffolie (2), insbesondere einer Polyolefinfolie, wobei die Kunststofffolie (2) eine erste und eine von der ersten Seite der Kunststofffolie (2) abgewandte zweite Seite aufweist, wobei die Kunststofffolie (2) auf ihrer ersten Seite und/oder zweiten Seite, insbesondere vollflächig, mit einem Haftvermittler (3) beschichtet ist,
**dadurch gekennzeichnet, dass** der Haftvermittler (3) Kieselsäure enthält.

3. Gebäudestruktur (1) nach einem der vorigen Ansprüche, **dadurch gekennzeichnet, dass** die erste Seite und/oder die zweite Seite der Kunststofffolie (2) vor dem Beschichten mit dem Haftvermittler (3) eine Oberflächenbehandlung zur Erhöhung der Polarität der Oberfläche der Kunststofffolie (2), insbesondere einer Koronabehandlung, unterzogen worden ist.

4. Gebäudestruktur (1) nach einem der vorigen Ansprüche, **dadurch gekennzeichnet, dass** die Kunststofffolie (2) auf ihrer ersten Seite und/oder zweiten Seite eine, insbesondere vollflächig aufgebrachte, selbstklebende Beschichtung (4) aufweist.

5. Gebäudestruktur (1) nach einem der vorigen Ansprüche, **dadurch gekennzeichnet, dass** die Kunststofffolie (2) auf ihrer ersten Seite und/oder zweiten Seite ein insbesondere vollflächig aufgebrachtes, textiles Flächengebilde (5), insbesondere ein Vlies, aufweist.

6. Gebäudestruktur (1) nach einem der vorigen Ansprüche, **dadurch gekennzeichnet, dass** die Kunststofffolie (2) auf der ersten Seite Vertiefungen (6) aufweist, denen komplementäre Erhebungen (7), insbesondere Erhebungen, die die Gestalt von Noppen aufweisen, auf der zweiten Seite der Kunststofffolie (2) entsprechen.

7. Gebäudestruktur (1) nach Anspruch 6, **dadurch gekennzeichnet, dass** die Erhebungen (7) in einem regelmäßigen Raster über die Fläche des Dichtelements (1), insbesondere der Kunststofffolie (2), verteilt sind.

8. Gebäudestruktur (1) nach einem der vorigen Ansprüche, **dadurch gekennzeichnet, dass** das Dichtelement (1) ein weiteres, insbesondere textiles, Flächengebilde (8), insbesondere ein Vlies, aufweist.

9. Gebäudestruktur (1) nach Anspruch 8, **dadurch gekennzeichnet, dass** das weitere Flächengebilde (8) Öffnungen und/oder Poren aufweist.

10. Gebäudestruktur (1) nach einem der Ansprüche 6 bis 9, **dadurch gekennzeichnet, dass** das weitere Flächengebilde (8) mit den Erhebungen (7) verbunden ist, so dass sich zwischen der Kunststofffolie (2) und dem weiteren Flächengebilde (8) um die Erhebungen (7) ein Kanalsystem (9) ausbildet.

11. Gebäudestruktur (1) nach einem der vorigen Ansprüche, **dadurch gekennzeichnet, dass** die Kunststofffolie (2) einen mehrschichtigen Aufbau aufweist.

12. Gebäudestruktur (1) nach einem der vorigen Ansprüche, **dadurch gekennzeichnet, dass** die Kunststofffolie (2) ein Verstärkungselement, insbesondere eine bewährende Zwischenlage und/oder eine Faserverstärkung, aufweist.

13. Gebäudestruktur, nach einem der vorigen Ansprüche, **dadurch gekennzeichnet, dass** das Dichtelement (1) eine Schicht zwischen zwei dem Dichtelement (1) benachbarten weiteren Schichten der Gebäudestruktur bildet.

14. Gebäudestruktur nach einem der Ansprüche 6 bis 13, **dadurch gekennzeichnet, dass** die Vertiefungen (6) mit einem Material ausgefüllt sind.

15. Gebäudestruktur nach einem der Ansprüche 6 bis 14, **dadurch gekennzeichnet, dass** um die Erhebungen (7) ein Kanalsystem (9) zwischen der Kunststofffolie (2) und einer Schicht der Gebäudestruktur, der die Erhebungen (7) zugewandt sind, ausgebildet ist, insbesondere wobei das Kanalsystem (9) eine Feuchtigkeitsabfuhr in der Erstreckungsebene des Dichtelements (1) aus dem Bereich der Gebäudestruktur, dem das weitere Flächengebilde (8) zugewandt ist, ermöglicht.

## Claims

1. Building structure, in particular wall, floor and/or ceiling, with a sealing element, having a plastic film (2), in particular a polyolefin film, wherein the plastic film (2) has a first side and a second side facing away from the first side of the plastic film (2), wherein the plastic film (2) is coated with an adhesion promoter (3) on its first side and/or second side, in particular over its entire surface,
**characterized in that** the adhesion promoter (3) is a water-based adhesion promoter.

2. Building structure, in particular wall, floor and/or ceiling, with a sealing element, having a plastic film (2), in particular a polyolefin film, wherein the plastic film (2) has a first side and a second side facing away from the first side of the plastic film (2), wherein the plastic film (2) is coated with an adhesion promoter (3) on its first side and/or second side, in particular over its entire surface,
**characterized in that** the adhesion promoter (3) contains silica.

3. Building structure (1) according to one of the preceding claims, **characterized in that** the first side and/or the second side of the plastic film (2) has been subjected to a surface treatment for increasing the polarity of the surface of the plastic film (2), in particular a corona treatment, before being coated with the adhesion promoter (3).

4. Building structure (1) according to one of the preceding claims, **characterized in that** the plastic film (2) has on its first side and/or second side a self-adhesive coating (4), in particular applied over its entire surface.

5. Building structure (1) according to one of the preceding claims, **characterized in that** the plastic film (2) has on its first side and/or second side a textile fabric (5), in particular a nonwoven, applied over its entire surface.

6. Building structure (1) according to one of the preceding claims, **characterized in that** the plastic film (2) has, on the first side, depressions (6) which correspond to complementary projections (7), in particular projections having the shape of knobs, on the second side of the plastic film (2).

7. Building structure (1) according to claim 6, **characterized in that** the projections (7) are spread in a regular grid over the surface of the sealing element (1), in particular the plastic film (2).

8. Building structure (1) according to one of the preceding claims, **characterized in that** the sealing element (1) has a further, in particular textile, fabric (8), in particular a nonwoven.

9. Building structure (1) according to claim 8, **characterized in that** the further fabric (8) has openings and/or pores.

10. Building structure (1) according to one of claims 6 to 9, **characterized in that** the further fabric (8) is connected to the projections (7) so that a channel system (9) is formed between the plastic film (2) and the further fabric (8) around the projections (7).

11. Building structure (1) according to one of the preceding claims, **characterized in that** the plastic film (2) has a multilayer structure.

12. Building structure (1) according to one of the preceding claims, **characterized in that** the plastic film (2) has a reinforcing element, in particular a proving intermediate layer and/or a fiber reinforcement.

13. Building structure, according to one of the preceding claims, **characterized in that** the sealing element (1) forms a layer between two further layers of the building structure adjacent to the sealing element (1).

14. Building structure according to one of claims 6 to 13, **characterized in that** the depressions (6) are filled with a material.

15. Building structure according to one of claims 6 to 14, **characterized in that** a channel system (9) is formed around the projections (7) between the plastic film (2) and a layer of the building structure facing the projections (7), wherein in particular the channel system (9) enables moisture to be dissipated in the plane of extension of the sealing element (1) from the region of the building structure facing the further fabric (8).

## Revendications

1. Structure de bâtiment, en particulier mur, sol et/ou plafond, comprenant un élément d'étanchéité comprenant un film plastique (2), en particulier un film polyoléfine, dans laquelle le film plastique (2) présente une première face et une seconde face opposée à la première face du film plastique (2), dans laquelle le film plastique (2) est recouvert sur sa première et/ou seconde face, en particulier sur toute la surface, d'un agent de liaison (3), **caractérisée en ce que** l'agent de liaison (3) est un agent de liaison à base d'eau.

2. Structure de bâtiment, en particulier mur, sol et/ou plafond, comprenant un élément d'étanchéité comprenant un film plastique (2), en particulier un film polyoléfine, dans laquelle le film plastique (2) présente une première face et une seconde face opposée à la première face du film plastique (2), dans laquelle le film plastique (2) est recouvert sur sa première et/ou seconde face, en particulier sur toute la surface, d'un agent de liaison (3), **caractérisée en ce que** l'agent de liaison (3) contient de l'acide silicique.

3. Structure de bâtiment (1) selon l'une quelconque des revendications précédentes, **caractérisée en ce que** la première face et/ou la seconde face du film plastique (2) a/ont été soumise(s) à un traitement de surface destiné à augmenter la polarité de la surface du film plastique (2), en particulier à un traitement corona, préalablement à l'application de l'agent de liaison (3).

4. Structure de bâtiment (1) selon l'une quelconque des revendications précédentes, **caractérisée en ce que** le film plastique (2) présente sur sa première et/ou seconde face une couche auto-adhésive (4), en particulier appliquée sur toute la surface.

5. Structure de bâtiment (1) selon l'une quelconque des revendications précédentes, **caractérisée en ce que** le film plastique (2) présente sur sa première et/ou seconde face un tissu textile (5), en particulier un tissu non tissé, en particulier appliqué sur toute la surface.

6. Structure de bâtiment (1) selon l'une quelconque des revendications précédentes, **caractérisée en ce que** le film plastique (2) présente sur la première face des renfoncements (6) auxquels correspondent, sur la seconde face du film plastique (2), des saillies complémentaires (7), en particulier des saillies présentant la forme de boutons.

7. Structure de bâtiment (1) selon la revendication 6, **caractérisée en ce que** les saillies (7) sont réparties selon une trame régulière sur la surface de l'élément d'étanchéité (1), en particulier du film plastique (2).

8. Structure de bâtiment (1) selon l'une quelconque des revendications précédentes, **caractérisée en ce que** l'élément d'étanchéité (1) présente un autre tissu (8), en particulier textile, en particulier un tissu non-tissé.

9. Structure de bâtiment (1) selon la revendication 8, **caractérisée en ce que** l'autre tissu (8) présente des ouvertures et/ou des pores.

10. Structure de bâtiment (1) selon l'une quelconque des revendications 6 à 9, **caractérisée en ce que** l'autre tissu (8) est relié aux saillies (7), de sorte qu'un système de canaux (9) est formé autour des saillies (7) entre le film plastique (2) et l'autre tissu (8).

11. Structure de bâtiment (1) selon l'une quelconque des revendications précédentes, **caractérisée en ce que** le film plastique (2) présente une structure multicouche.

12. Structure de bâtiment (1) selon l'une quelconque des revendications précédentes, **caractérisée en ce que** le film plastique (2) présente un élément de renforcement, en particulier une couche intermédiaire résistante et/ou un renfort en fibres.

13. Structure de bâtiment, selon l'une des revendications précédentes, **caractérisée en ce que** l'élément d'étanchéité (1) forme une couche entre deux autres couches de la structure de bâtiment adjacentes à l'élément d'étanchéité (1) .

14. Structure de bâtiment selon l'une quelconque des revendications 6 à 13, **caractérisée en ce que** les renfoncements (6) sont remplis d'un matériau.

15. Structure de bâtiment selon l'une quelconque des revendications 6 à 14, **caractérisée en ce qu'**un système de canaux (9) est formé autour des saillies (7) entre le film plastique (2) et une couche de la structure de bâtiment qui est tournée vers les saillies (7), en particulier dans laquelle le système de canaux (9) permet une évacuation de l'humidité dans le plan d'extension de l'élément d'étanchéité (1) hors de la zone de la structure de bâtiment vers laquelle est tourné l'autre tissu (8).
